# FASCICULE DE BREVET EUROPEEN

(11) **EP 2 456 582 B1**
(45) Date de publication et mention de la délivrance du brevet: **09.07.2014**
(21) Numéro de dépôt: 10751991.0
(22) Date de dépôt: 09.07.2010
(51) Int. Cl.: B22C 1/22

(54) **PROCÉDÉ D'OBTENTION D'UN CORPS FORMÉ À PARTIR D'UN MÉLANGE GRANULAIRE**
VERFAHREN ZUR HERSTELLUNG EINES AUS EINER GRANULATFÖRMIGEN MISCHUNG HERGESTELLTEN ELEMENTS
METHOD FOR PRODUCING A BODY MADE FROM A GRANULAR MIXTURE

(30) Priorité: 24.07.2009 FR 0955185
(43) Date de publication de la demande: 30.05.2012
(73) Titulaire: Huttenes Albertus France, 60870 Brenouille (FR)
(72) Inventeur: SARRAZIN, Stéphane, F-95460 Ezanville (FR); VARGAS, Manuel, F-60700 Pont-sainte-maxence (FR)
(74) Mandataire: Salou, Clarisse
(86) Numéro de dépôt international: PCT/FR2010/051457
(87) Numéro de publication internationale: WO 2011/010045

(56) Documents cités:
- US-A- 4 942 217
- US-A- 5 795 934
- RALF-JOACHIM GERLACH, MINELCO GMBH, ESSEN, GERMANY: "AWB - the binder system for a clean foundry", USEPA MEETING ON INNOVATIVE BINDERS FOR THE IRON AND STEEL FOUNDRIES OCTOBER 26, 2005, [Online] 26 octobre 2005 (2005-10-26), XP002441666,
- TRINOWSKI DOUGLAS M., HA INTERNATIONAL, WESTMONT, IL: "Environmental Improvements to UCB Binders & the CORDIS Process", USEPA MEETING ON INNOVATIVE BINDERS FOR THE IRON AND STEEL FOUNDRIES, 26 octobre 2005 (2005-10-26), XP002586795,

## Description

La présente invention concerne un procédé d'obtention d'un corps à partir d'un mélange granulaire, ainsi que le corps obtenu par ledit procédé.

Les procédés de formage à chaud de substances granulaires ou fibreuses sont des procédés industriels conduisant à la fabrication de corps le plus souvent solides. Les procédés industriels de type « *hot box »* (ou boîte chaude) sont réalisés depuis très longtemps par l'utilisation de résines. En général, les résines sont mélangées intimement avec la ou les substances à agglomérer, ou étalées sur la surface à coller, en association avec un durcisseur dont la fonction est de rendre le milieu réactionnel acide in situ.

Les substances à former ou agglomérer généralement en forme solide comportent le plus souvent au moins une charge granulaire tels que par exemple des sables minéraux ou synthétiques, des micro billes de verre, des micro billes de céramique et des fibres le plus souvent ligno-cellulosiques.

Après l'incorporation des résines et durcisseurs, et éventuellement d'au moins un autre additif, la substance à agglomérer est généralement fluide, le plus souvent visqueuse. La substance à agglomérer est alors mise en contact avec ou dans un outil de formage, puis chauffée, la chaleur étant généralement apportée par le chauffage de l'outillage de formage (ou outillage de mise en forme).

La chaleur provoque le durcissement des résines par polymérisation, puis le corps solide ainsi formé est généralement retiré de l'outil de formage pour son utilisation ultérieure. Par « corps », on entend selon l'invention un objet matériel occupant une portion d'espace et présentant des propriétés particulières. Le corps selon l'invention est le plus souvent solide, c'est-à-dire de forme propre et de volume invariable. Un corps fluide est un corps constituant un milieu continu déformable.

Un des procédés industriels de type « *hot box »* utilise des résines polycondensées avec du formaldéhyde. Ces résines thermodurcissent à chaud et en milieu acide, par polymérisation.

Dans le domaine de la fonderie, les moules et noyaux sont des corps généralement solides, qui peuvent être fabriqués par un procédé de type « *hot box* » à partir d'une charge granulaire. A la coulée de chaque pièce métallique, les moules et noyaux correspondants sont détruits par combustion de la résine au contact du métal. Cela implique la production d'un jeu de moule et noyau par pièce produite. Pour favoriser cette destruction et limiter les nuisances des gaz de combustion, les taux de résines, calculés en extrait sec, sont extrêmement bas, le plus souvent compris de 0,3 à 3%, en poids par rapport à la masse de la charge granulaire à agglomérer. De plus, la nature chimique des gaz de combustion a son importance, tant pour la qualité des pièces de métal coulées, que pour la santé des travailleurs.

Enfin, dans certains domaines d'industrie, tel que celui de l'industrie automobile de série, la production de moules et de noyaux doit se faire à des cadences élevées pouvant aller jusqu'à quelques milliers de pièces par jour. Dans ce cas, les outillages de formage ou boîte à noyaux sont métalliques car les températures de chauffage pour obtenir une polymérisation rapide des résines sont importantes, généralement supérieure à 150°C et pouvant aller jusqu'à 380°C. Cela implique des coûts importants d'outillage et surtout des problèmes de précision dimensionnelle des moules et des noyaux, liés à la dilatation des outillages. D'autre part, les nuisances respiratoires pour les personnes travaillant dans ce milieu ont été jugées inadmissibles.

C'est pourquoi les procédés de type « *hot box »* ont été progressivement délaissés il y a une quarantaine d'années par l'industrie, au profit de procédés type « *cold box* » (ou boîte froide). Ces procédés « *cold box »* proposaient l'utilisation de liants alternatifs, à froid, générant des nuisances jugées moindres, en termes d'hygiène et de sécurité, et surtout compatibles avec une cadence de fabrication industrielle élevée.

Cependant, à l'heure actuelle, les liants alternatifs « *cold box »* présentent des nuisances d'hygiène et de sécurité, qui sont devenues moins compatibles avec des normes plus sévères en termes de sécurité et d'environnement.

C'est dans ce contexte que la demanderesse a découvert un procédé amélioré de type « *hot box* », permettant de résoudre les problèmes présentés par les procédés de type *« hot box* » précédemment décrits, et palliant les insuffisances des procédés de type « *cold box* », tout particulièrement dans l'industrie de la fonderie.

L'invention concerne un procédé pour la réalisation d'un corps, ledit procédé comprenant au moins les étapes successives suivantes:
- la fabrication d'un mélange granulaire, comprenant :
   **a-** au moins 90%, de préférence de 96 à 99%, en poids de grains , ou particules, lesdits grains étant principalement composés d'au moins un oxyde minéral, et au moins 80% desdits grains ayant une taille de 10 à 3000 µm,
   **b-** de 0,3 à 3%, de préférence de 0,6 à 1,5%, en poids d'au moins une résine polycondensée avec du formaldéhyde et/ou ses dérivés, le pourcentage étant calculé en extrait sec de résine,
   **c-** de 0,001 à 1%, de préférence de 0,005 à 0,04%, en poids d'au moins un agent durcisseur, le pourcentage étant calculé en extrait sec de durcisseur,
   **d-** de 0,005 à 0,35%, de préférence de 0,02 à 0,15%, en poids d'au moins un composé capteur de formaldéhyde, et
   **e-** de 0,2 à 3%, de préférence de 0,7 à 2%, en poids d'eau;
- la mise en contact dudit mélange granulaire avec au moins une surface d'un outil de formage, et
- l'insufflage dans le mélange granulaire d'au moins un flux de gaz à une température de 50 à 380 degrés, pour une durée de 1 à 300 secondes, pour assurer au moins partiellement le durcissement dudit mélange,
le procédé étant tel que tel que le composé capteur de formaldéhyde est le carbohydrazide.

L'étape d'insufflage permet de mettre en oeuvre au moins partiellement au moins une réaction chimique qui permet le durcissement au moins partiel dudit mélange.

Ainsi qu'il est connu de l'homme du métier, ces étapes sont généralement suivies d'une extraction de corps solide de l'outillage de formage.

Bien entendu, le mélange granulaire peut comporter tout autre additif connu de l'homme du métier. En particulier le mélange granulaire peut comporter tout additif, liquide ou pulvérulent, jugé utile par l'homme du métier pour favoriser le comportement physico-chimique du mélange lors de sa transformation et son utilisation ultérieure.

Les grains du mélange granulaire selon l'invention sont généralement naturels ou synthétiques. De préférence, les grains sont des grains d'oxyde(s) minéral(aux), le plus souvent des mélanges sableux siliceux naturels dont les grains sont composés principalement d'oxyde de silicium et dont la granulométrie AFS peut aller de 30 à 140.

L'eau est généralement apportée dans le mélange granulaire principalement comme support ou comme solvant des autres composants dudit mélange granulaire.

Ainsi, dans un mode de réalisation préféré du procédé selon l'invention, l'agent durcisseur se trouve lors de la formation du mélange granulaire sous forme d'une solution aqueuse, contenant généralement de 0,5 à 20% en poids de l'agent durcisseur, ladite solution aqueuse comportant généralement en outre et de préférence de 0,005 à 50% en poids de carbohydrazide.

En effet, dans la mesure où l'agent durcisseur est généralement incorporé à un taux très faible dans le mélange granulaire, sa dispersion se fait d'autant mieux qu'il est dilué dans une solution aqueuse. Il en est de même pour le carbohydrazide.

Le mélange granulaire selon l'invention est généralement sous forme d'au moins un agrégat fluide.

La surface de l'outil de formage avec laquelle est en contact le mélange granulaire représente généralement le « négatif » de la pièce à former dans le corps fabriqué selon l'invention.

L'étape d'insufflage d'un flux de gaz chaud est généralement telle que la température et le débit dudit flux sont ajustés pour provoquer l'élévation de la température au coeur du mélange granulaire, substantiellement au-dessus de la température ambiante (qui est d'environ 20°C) et de préférence au dessus de 45°C.

Le procédé selon l'invention, par la présence dans le mélange granulaire de carbohydrazide, permet avantageusement de limiter l'émission de formaldéhyde. En effet, la présence de carbohydrazide permet de bloquer le formaldéhyde libre en fin de durcissement, de façon particulièrement avantageuse selon l'invention.

De préférence, le procédé selon l'invention est tel que, en outre, l'outil de formage est chauffé à une température de 40 à 180°C, de préférence de 50 à 140° C. Cela est généralement réalisé dès l'étape de mise en contact, et au plus tard lors de l'étape d'insufflage.

Ainsi, la chaleur apportée par le gaz chaud est complétée par la chaleur de chauffage de l'outillage de formage, de façon à optimiser, dans une version préférée de l'invention, le chauffage du mélange granulaire.

Le gaz est de préférence choisi dans le groupe formé par de l'air, un gaz neutre et un gaz participant à l'acidification du milieu réactionnel.

Par « gaz neutre », on entend selon l'invention un gaz ne participant pas à la réaction par exemple choisi parmi le diazote et les gaz dits nobles tels que l'hélium, le néon, et l'argon. Par « gaz participant à l'acidification du milieu réactionnel », on entend selon l'invention un gaz permettant de diminuer in situ le pH du milieu comme le dioxyde de carbone et le dioxyde de soufre.

Dans un mode de réalisation préféré de l'invention, le procédé comporte une étape supplémentaire au cours de laquelle on fait circuler au sein du mélange granulaire au moins partiellement durci au moins un flux d'au moins un gaz à température inférieure ou égale à la température ambiante, par exemple de 5°C à 25°C pendant une durée de 1 à 300 secondes, le gaz étant de préférence choisi dans le groupe formé par l'air, le diazote et le dioxyde de carbone. Cette étape est le plus souvent réalisée avant l'étape éventuelle de retrait du corps de l'outil de formage. Le gaz est le plus souvent non chauffé au préalable, et donc sensiblement à température ambiante, voire éventuellement refroidi.

En effet, comme les nuisances du formaldéhyde peuvent s'exercer postérieurement à la fabrication du corps, durant son stockage ou sa manipulation ultérieure, il s'avère très utile et avantageux dans le cadre de l'invention de compléter l'action du carbohydrazide en bloquant la réaction de polymérisation de la résine, par refroidissement du corps après son durcissement partiel. De plus ce flux de gaz permet avantageusement de laver par un flux d'air, de diazote ou de dioxyde de carbone, le formaldéhyde libre éventuellement résiduel.

On entend par résine ou résine polycondensée ou résine polycondensée avec du formaldéhyde et/ou ses dérivés, une composition d'au moins une résine ayant subi une réaction chimique entre un premier élément choisi parmi l'urée et ses dérivés, la mélamine, la benzoguanamine, le glycolurile, le phénol ou l'alcool furfurylique et un second élément choisi parmi le formaldéhyde et/ou ses dérivés, dans laquelle la croissance de chaîne provoque généralement à chaque étape la libération d'une molécule d' eau.

Le ou les composants de la résine peu(ven)t rester libre en excès dans la résine, ou encore y avoir été ajouté(s) après la polycondensation.

La résine polycondensée avec du formaldéhyde et/ou ses dérivés est généralement telle qu'elle thermodurcit en milieu acide. Une telle résine est disponible commercialement.

La résine polycondensée avec du formaldéhyde et/ou ses dérivés selon l'invention peut contenir éventuellement au moins un additif choisi parmi les solvants, les diluants, les stabilisants et les charges de particules solides, utilisé(e)(s) habituellement et connu(e)(s) de l'homme du métier pour obtenir un effet particulier. Ainsi ladite résine peut contenir au moins un silane, qui permet généralement de ponter et donc d'optimiser la liaison entre la résine et les grains.

L'agent durcisseur est généralement choisi dans le groupe formé par les composés suivants :
- les sels naturellement acides tels que les sels d'ammonium notamment les persulfates, les nitrates, les bisulfates, les sulfates et les chlorures d'ammonium ; et
- les sels générant un acide par réaction avec un aldéhyde tels que les sels d'hydroxylamine notamment les sulfates, les chlorhydrates, les phosphates, les sulfonates et les nitrates d'hydroxylamine.

L'agent durcisseur est plus généralement tel qu'il rend le milieu réactionnel du mélange acide soit par son acidité propre, soit par sa capacité à libérer de l'acide au cours du processus de polymérisation.

De façon particulièrement préférée, l'agent durcisseur est choisi dans le groupe formé par les sels d'hydroxylamine. Les sels d'hydroxylamine libèrent avantageusement un acide en présence de formaldéhyde.

Dans ce cas, il apparaît de façon surprenante selon l'invention que le formaldéhyde libre disponible se combine prioritairement avec les sels d'hydroxylamine pour libérer un acide, et que le carbohydrazide n'inhibe pas ou peu la formation d'acide par lesdits sels au cours de la réaction de durcissement.

De plus, l'ajout du carbohydrazide améliore sensiblement les caractéristiques mécaniques des pièces obtenues par le procédé selon l'invention.

En outre, la demanderesse a constaté que l'utilisation de sels hydroxylamine améliore significativement et avantageusement le procédé selon l'invention, en accélérant la cinétique de durcissement et en augmentant l'acidité du milieu réactionnel au fur et à mesure que la réaction de thermodurcissement libère du formaldéhyde.

L'homme du métier est à même de choisir la résine et l'agent durcisseur qui conviennent au cas qu'il doit réaliser, en particulier en prenant en compte la réactivité du système de liant, c'est-à-dire des résine(s) et durcisseur(s) incorporés dans le mélange granulaire. De façon classique, en présence de matériel de mélange usuel, l'homme du métier introduit d' abord la ou les parties granulaires dans un mélangeur et procède ensuite à l'introduction de parties liquides, le temps de mélange étant fonction du matériel, et de préférence de 15 s à 5 min.

Bien entendu, le procédé selon l'invention peut être tout particulièrement utilisé dans un procédé de fabrication d'une pièce de fonderie en métal moulé, qui comprend le coulage d'un métal liquide dans au moins un moule et/ou noyau, caractérisé en ce que ledit moule et/ou noyau est un corps obtenu par le procédé selon l'invention tel que décrit précédemment.

De préférence, un tel procédé de fabrication d'une pièce de fonderie en métal moulé est tel que le métal est choisi dans le groupe formé par l'aluminium, les métaux non ferreux et les alliages non ferreux.

Ce procédé de fabrication d'une pièce de fonderie en métal moulé permet d'obtenir toute pièce métallique moulée obtenue par un tel procédé de fabrication, ainsi que tout ensemble mécanique comportant au moins une telle pièce.

L'invention sera mieux comprise à la lumière des exemples suivants qui illustrent l'invention à titre non limitatif.

### Exemples :

Les exemples ont été réalisés en mélangeant à chaque fois 4 kg de sable siliceux SIFRACO LA 32 aux liants dans les proportions indiquées pour chaque mélange granulaire.

Le mélange granulaire a été effectué dans un malaxeur à bol vibrant avec un temps de mélange de 60". Le mélange granulaire a ensuite été insufflé dans une boîte munie d'un système de chauffage et d'une amenée d'air chaud, contenant deux éprouvettes de mesure de caractéristiques mécaniques normalisées de section carrée 1 ", sur une machine ROPER.

Le durcissement s'est effectué selon les données indiquées pour chaque mélange granulaire.

La mesure de formaldéhyde a été effectuée par l'appareillage Pompe DRAEGER munie des tubes « formaldéhyde » 0,2/a ou 2/a, selon la concentration à mesurer. Les gammes de mesures sont de 0,2 à 5 ppm pour le tube 0,2A et 2 à 40 ppm pour le tube 2A.

Cette mesure a été effectuée pour chaque mélange granulaire d'une part au-dessus du bol vibrant du malaxeur, et d'autre part au-dessus de la boîte à noyaux au déboîtage des éprouvettes après durcissement.

Tous les taux d'incorporation sont des pourcentages en poids.

Les mesures de flexion ont été effectuées selon les recommandations techniques n° 481 et 487 de décembre 1999 du B.N.I.F édités et disponibles auprès du Centre Technique des Industries de la Fonderie situé à Sèvres en France et les résultats sont exprimés en daN/cm².

On considère que des résistances à la flexion d'environ 10 daN/cm2 au déboîtage sont suffisantes pour permettre la manipulation des corps formés, et que des résistances d'environ 30 daN/cm2 après une heure sont souvent satisfaisantes pour permettre la coulée du métal.

La résine CLEANTECH 11 R26 était une résine urée/formaldéhyde polycondensée en milieu acide commercialisée par la société HUTTENES-ALBERTUS.

La résine Résital 12B62 était une résine formo-phénolique commercialisée par la société HUTTENES-ALBERTUS.

L'agent durcisseur CLEANTECH 14D38 était une solution aqueuse contenant 3% de sulfate d'hydroxylamine et 15% de carbohydrazide commercialisée par la société HUTTENES-ALBERTUS.

L'agent durcisseur CLEANTECH 14D68 était une solution aqueuse contenant 3% de sulfate d'hydroxylamine commercialisée par la société HUTTENES-ALBERTUS.

L'agent durcisseur Harter AT3B utilisé est commercialisé par la société HUTTENES-ALBERTUS. C'est une solution aqueuse de sels acides à base de nitrates d'ammonium, d'urée et de lignosulfonates.

L'extrait sec exprimé en % poids est le résiduel produit après chauffage d'un gramme de produit à 135° C pendant une heure.

Les éprouvettes obtenues sont des corps formés solides que l'on peut assimiler à des noyaux.

### Exemple 1 (comparatif):

Résine : CLEANTECH 11 R26 à 1.5% soit 0,81 % en extrait sec
Durcisseur : CLEANTECH 14D68 à 0.4% soit 0,012% en extrait sec
Température Boîte : 100°C
Température Air Chaud : 150°C
Durée de durcissement en boîte : 120"
Résistances Flexions à la sortie de boîte : 21
Résistances Flexions 1 heure après : 40
Formaldéhyde au malaxage : inférieur à 0,2 ppm (non détectable)
Formaldéhyde au déboîtage : 0,5 ppm.

Les corps formés selon le procédé de l'exemple 1, avec un taux de résine faible et une durée de durcissement relativement longue, possèdent des caractéristiques mécaniques suffisantes pour envisager l'obtention de corps formés dans un contexte industriel. Néanmoins, la teneur élevée de formaldéhyde pose problème au déboîtage (ou extraction).

### Exemple 2 (comparatif):

Résine : CLEANTECH 11R26 à 2% soit 1,09% en extrait sec
Durcisseur : CLEANTECH 14D68 à 0.4% soit 0,012% en extrait sec
Température Boîte : 100°C
Température Air Chaud : 150°C
Durée de durcissement en boîte : 30"
Résistances Flexions à la sortie de boîte : 10
Résistances Flexions 1 heure après : 32
Formaldéhyde au malaxage : inférieur à 0,2 ppm (non détectable)
Formaldéhyde au déboîtage : 0,5 ppm

Les corps formés selon le procédé de l'exemple 2, avec un taux de résine moyen et une durée de durcissement relativement faible, possèdent des caractéristiques mécaniques suffisantes pour envisager l'obtention de corps formés dans un contexte industriel. Néanmoins, la teneur élevée de formaldéhyde pose problème au déboîtage (ou extraction).

### Exemple 3 (selon l'invention):

Résine : CLEANTECH 11 R26 à 2% soit 1,09% en extrait sec
Durcisseur : CLEANTECH 14D38 à 0.4% soit 0,072% en extrait sec
Température Boîte : 100°C
Température Air Chaud : 150°C
Durée de durcissement en boîte : 30"
Résistances Flexions à la sortie de boîte : 14
Résistances Flexions 1 heure après : 56
Formaldéhyde au malaxage : Inférieur à 0,2 ppm (non détectable)
Formaldéhyde au déboîtage : Inférieur à 0,2 ppm (non détectable)

Les corps formés selon le procédé de l'exemple 1, avec un taux de résine moyen et une durée de durcissement relativement faible, possèdent des caractéristiques mécaniques suffisantes pour envisager l'obtention de corps formés dans un contexte industriel. Les taux de formaldéhyde sont inférieurs au seuil de détection.

### Exemple 4 (selon l'invention):

Résine : CLEANTECH 11 R26 à 2% soit 1,09% en extrait sec
Durcisseur : CLEANTECH 14D38 à 0,4 soit 0,072% en extrait sec
Température Boîte : 100°C
Température Air Chaud : 150°C
Durée de durcissement en boîte : 120"
Résistances Flexions à la sortie de boîte : 50
Résistances Flexions 1 heure après : 86
Formaldéhyde au malaxage : Inférieur à 0,2 ppm (non détectable)
Formaldéhyde au déboîtage : Inférieur à 0,2 ppm (non détectable)

Par rapport à l'exemple 3, la durée de durcissement a été augmentée ce qui améliore sensiblement les caractéristiques mécaniques des corps formés, tout en n'ayant aucune influence sur l'absence de nuisances dues au formaldéhyde.

### Exemple 5 (comparatif):

Résine : Resital 12B62 à 2% soit 1,28% en extrait sec
Durcisseur : Harter AT3B à 0.5% soit 0,31% en extrait sec
Température Boîte : 220°C
Température Air Chaud : non gazé
Durée de durcissement en boîte : 120"
Résistances Flexions à la sortie de boîte : 56
Résistances Flexions 1 heure après : 78
Formaldéhyde au malaxage : 1 ppm
Formaldéhyde au déboîtage : 20ppm

Le procédé « hot box » usuel avec les réglages habituels de l'homme du métier donne lieu à des émissions de formaldéhyde incompatibles avec les normes actuelles en terme de sécurité.

### Exemple 6 (comparatif):

Résine : Resital 12B62 à 2% soit 1,28% en extrait sec
Durcisseur : Harter AT3B à 0.5% soit 0,31% en extrait sec
Température Boîte : 100°C
Température Air Chaud : non gazé
Durée de durcissement en boîte : 30"
Résistances Flexions à la sortie de boîte : 1
Résistances Flexions 1 heure après : 23
Formaldéhyde au malaxage : 1 ppm
Formaldéhyde au déboîtage : 1 ppm

Par rapport à l'exemple 5, la température de la boîte a été diminuée. Le procédé « hot box » usuel avec les réglages de température de boîte selon l'invention ne permet pas d'attendre les résistances à la flexion en sortie de boîte nécessaires à l'extraction du corps formé. En outre, les émissions de formaldéhyde sont incompatibles avec les normes actuelles en termes de sécurité.

## Revendications

1. Procédé pour la réalisation d'un corps, ledit procédé comprenant au moins les étapes successives suivantes:
- la préparation d'un mélange granulaire, comprenant :
**a-** au moins 90%, de préférence de 96 à 99%, en poids de grains,
lesdits grains étant principalement composés d'au moins un oxyde minéral, et au moins 80% desdits grains ayant une taille de 10 à 3000 µm,
**b-** de 0,3 à 3%, de préférence de 0,6 à 1,5%, en poids d'au moins une résine polycondensée avec du formaldéhyde et/ou ses dérivés, le pourcentage étant calculé en extrait sec de résine,
**c-** de 0,001 à 1%, de préférence de 0,005 à 0,04%, en poids d'au moins un agent durcisseur, le pourcentage étant calculé en extrait sec de durcisseur,
**d-** de 0,005 à 0,35%, de préférence de 0,02 à 0,15%, en poids d'au moins un composé capteur de formaldéhyde, et
**e-** de 0,2 à 3%, de préférence de 0,7 à 2%, en poids d'eau;
- la mise en contact dudit mélange granulaire avec au moins une surface d'un outil de formage, et
- l'insufflage dans le mélange granulaire d'au moins un flux de gaz à une température de 50 à 380 degrés, pour une durée comprise de 1 à 300 secondes, pour assurer au moins partiellement le durcissement dudit mélange,
le procédé étant tel que le composé capteur de formaldéhyde est le carbohydrazide.

2. Procédé selon la revendication précédente, tel que l'agent durcisseur se trouve lors de la formation du mélange granulaire sous forme d'une solution aqueuse, contenant généralement de 0,5 à 20% en poids de l'agent durcisseur, ladite solution aqueuse comportant en outre et de préférence de 0,005 à 50% en poids de carbohydrazide.

3. Procédé selon l'une quelconque des revendications précédentes, tel que, en outre, l'outil de formage est chauffé à une température de 40 à 180°C, de préférence de 50 à 140° C.

4. Procédé selon l'une quelconque des revendications précédentes, tel que ledit gaz est choisi dans le groupe formé par de l'air, un gaz neutre et un gaz participant à l'acidification du milieu réactionnel.

5. Procédé selon l'une quelconque des revendications précédentes, comportant une étape supplémentaire au cours de laquelle on fait circuler au sein du mélange granulaire au moins partiellement durci un flux d'au moins un gaz à température inférieure ou égale à la température ambiante, pendant une durée de 1 à 300 secondes, le gaz étant de préférence choisi dans le groupe formé par l'air, le diazote et le dioxyde de carbone.

6. Procédé selon l'une quelconque des revendications précédentes, dans lequel la résine polycondensée avec du formaldéhyde et/ou ses dérivés est une composition d'au moins une résine ayant subi une réaction chimique entre un premier élément choisi parmi l'urée et ses dérivés, la mélamine, la benzoguanamine, le glycolurile, le phénol ou l'alcool furfurylique et un second élément choisi parmi le formaldéhyde et/ou ses dérivés.

7. Procédé selon l'une quelconque des revendications précédentes, dans lequel l'agent durcisseur est choisi dans le groupe formé par les composés suivants
- les sels naturellement acides tels que les sels d'ammonium notamment les persulfates, les nitrates, les bisulfates, les sulfates et les chlorures d'ammonium ; et
- les sels générant un acide par réaction avec un aldéhyde tels que les sels d'hydroxylamine notamment les sulfates, les chlorhydrates, les phosphates, les sulfonates et les nitrates d'hydroxylamine;
et de préférence l'agent durcisseur est choisi dans le groupe formé par les sels d'hydroxylamine.

## Patentansprüche

1. Verfahren zum Herstellen eines Körpers, wobei das Verfahren zumindest die nachstehenden, aufeinanderfolgenden Schritte umfasst:
- Herstellen eines granulatförmigen Gemisches, umfassend:
a- zumindest 90 Gew.-%, vorzugsweise 96 bis 99 Gew.-% Körner, wobei die Körner hauptsächlich aus zumindest einem Mineraloxid zusammengesetzt sind und zumindest 80 % der Körner eine Größe von 10 bis 3000 µm haben,
b- 0,3 bis 3 Gew.-%, vorzugsweise 0,6 bis 1,5 Gew.-% an zumindest einem mit Formaldehyd und/oder dessen Derivaten polykondensierten Harz, wobei der Prozentsatz im Trockenrückstand des Harzes berechnet ist,
c- 0,001 bis 1 Gew.-%, vorzugsweise 0,005 bis 0,04 Gew.-% an zumindest einem Härter, wobei der Prozentsatz im Trockenrückstand des Härters berechnet ist,
d- 0,005 bis 0,35 Gew.-%, vorzugsweise 0,02 bis 0,15 Gew.-% an zumindest einem Formaldehydfänger, und
e- 0,2 bis 3 Gew.-%, vorzugsweise 0,7 bis 2 Gew.-% Wasser;
- Inkontaktbringen des granulatförmigen Gemischs mit zumindest einer Oberfläche eines Formwerkzeugs, und
- Einblasen von zumindest einem Gasstrom in das granulatförmige Gemisch bei einer Temperatur von 50 bis 380° für eine Dauer von 1 bis 300 Sekunden, um zumindest teilweise das Aushärten des Gemischs zu gewährleisten,
wobei das Verfahren derart ist, dass der Formaldehydfänger Carbonhydrazid ist.

2. Verfahren nach dem vorangehenden Anspruch, wobei der Härter bei der Bildung des granulatförmigen Gemischs in Form von einer wässrigen Lösung vorliegt, die allgemein 0,5 bis 20 Gew.-% an Härter enthält, wobei die wässrige Lösung ferner vorzugsweise 0,005 bis 50 Gew.-% Carbonhydrazid enthält.

3. Verfahren nach einem der vorangehenden Ansprüche, wobei das Formwerkzeug ferner auf eine Temperatur von 40 bis 180 °C, vorzugsweise von 50 bis 140 °C, erhitzt wird.

4. Verfahren nach einem der vorangehenden Ansprüche, wobei das Gas ausgewählt ist aus der Gruppe umfassend Luft, ein inertes Gas und ein Gas, das zur Ansäuerung des Reaktionsmillieus beiträgt.

5. Verfahren nach einem der vorangehenden Ansprüche, umfassend einen zusätzlichen Schritt, bei dem in dem zumindest teilweise ausgehärteten granulatförmigen Gemisch ein Strom von zumindest einem Gas bei einer Temperatur geringer oder gleich der Raumtemperatur für eine Dauer von 1 bis 300 Sekunden umgewälzt wird, wobei das Gas vorzugsweise aus der Gruppe umfassend Luft, Distickstoff und Kohlendioxid ausgewählt wird.

6. Verfahren nach einem der vorangehenden Ansprüche, wobei das mit Formaldehyd und/oder seinen Derivaten polykondensierte Harz eine Zusammensetzung von zumindest einem Harz ist, das eine chemische Reaktion zwischen einem ersten Element, ausgewählt aus Harnstoff und seinen Derivaten, Melamin, Benzoguanamin, Glycoluril, Phenol oder Furfurylalkohol, und einem zweiten Element, ausgewählt aus Formaldehyd und/oder seinen Derivaten, erfahren hat.

7. Verfahren nach einem der vorangehenden Ansprüche, wobei der Härter ausgewählt ist aus der Gruppe umfassend die nachfolgenden Verbindungen
- natürlich saure Salze, wie etwa Ammoniumsalze, insbesondere Persulfate, Nitrate, Bisulfate, Sulfate und Ammoniumchloride; und
- Salze, die durch Reaktion mit einem Aldehyd säurebildend sind, wie etwa Hydroxylaminsalze, insbesondere Sulfate, Chlorhydrate, Phosphate, Sulfonate und Hydroxylaminnitrate;
wobei der Härter vorzugsweise ausgewählt ist aus der Gruppe umfassend Hydroxylaminsalze.

## Claims

1. Method for producing a body, said method comprising at least the following successive steps:
- preparing a granular mixture, comprising:
**a-** at least 90%, preferably 96 to 99% by weight of particles, said particles being mainly composed of at least one mineral oxide, and at least 80% of said grains having a size of 10 to 3000 µm,
**b-** 0.3 to 3%, preferably 0.6 to 1.5% by weight of at least one resin polycondensed with formaldehyde and/or its derivatives, the percentage being calculated in dry resin solids,
**c-** 0.001 to 1%, preferably 0.005 to 0.04% by weight of at least one curing agent, the percentage being calculated in dry curing agent solids,
**d-** 0.005 to 0.35% by weight, preferably 0.02 to 0.15% by weight of at least one formaldehyde scavenger compound, and
**e-** 0.2 to 3% by weight, preferably 0.7 to 2% by weight of water;
- placing said granular mixture in contact with at least one surface of a forming tool, and
- blowing at least one gas stream into the granular mixture at a temperature of 50 to 380 degrees, for a duration of 1 to 300 seconds, to ensure at least partial curing of said mixture,
the method being such that the formaldehyde scavenger compound is carbohydrazide.

2. Method according to the previous claim, such that the curing agent, during the formation of the granular mixture, is in the form of an aqueous solution, containing generally 0.5 to 20% by weight of the curing agent, said aqueous solution moreover preferably containing 0.005 to 50% by weight of carbohydrazide.

3. Method according to any one of the previous claims, such that moreover, the forming tool is heated to a temperature of 40 to 180°C, preferably 50 to 140 °C.

4. Method according to any one of the previous claims, such that said gas is chosen from the group consisting of air, an inert gas and a gas contributing to the acidification of the reaction medium.

5. Method according to any one of the previous claims, including an additional step, during which a stream of at least one gas is circulated within the at least partially cured granular mixture, at a temperature less than or equal to the ambient temperature, for a duration of 1 to 300 seconds, the gas being preferably chosen from the group consisting of air, dinitrogen and carbon dioxide.

6. Method according to any one of the previous claims, in which the resin polycondensed with formaldehyde and/or its derivatives is a composition of at least one resin having undergone a chemical reaction between a first element chosen from urea and its derivatives, melamine, benzoguanamine, glycoluril, phenol or furfuryl alcohol and a second element chosen from formaldehyde and/or its derivatives.

7. Method according to any one of the previous claims, in which the curing agent is chosen from the group consisting of the following compounds
- naturally acid salts such as ammonium salts, in particular ammonium persulphates, nitrates, bisulphates, sulphates and chlorides; and
- salts generating an acid by reaction with an aldehyde such as hydroxylamine salts, in particular hydroxylamine sulphates, hydrochlorides, phosphates, sulphonates and nitrates.
and preferably the curing agent is chosen from the group consisting of hydroxylamine salts.
